# EUROPEAN PATENT APPLICATION

(11) **EP 4 797 383 A1**
(43) Date of publication of application: **26.08.2026**
(21) Application number: 25849636.3
(22) Date of filing: 08.07.2025
(51) Int. Cl.: H01M 10/613, H01M 10/643, H01M 10/6567

(54) **LIQUID COOLING UNIT AND BATTERY PACK**

(30) Priority: 30.12.2024 CN 202423289430 U
(71) Applicant: Eve Energy Co., Ltd, Huizhou, Guangdong 516006 (CN)
(72) Inventor: HUANG, Liansheng, Huizhou, Guangdong 516006 (CN); ZHAO, Yuhang, Huizhou, Guangdong 516006 (CN); YAN, Shiwei, Huizhou, Guangdong 516006 (CN); TANG, Jing, Huizhou, Guangdong 516006 (CN)
(74) Representative: HGF
(86) International application number: PCT/CN2025/107505
(87) International publication number: WO 2026/144088

(57) **Abstract**

Provided are a liquid cooling device and a battery pack. The liquid cooling device includes multiple liquid cooling plates (1), multiple metal tubes (2), and multiple connectors (3). Each metal tube (2) is configured to connect two liquid cooling plates (1). An end of the metal tube (2) is inserted into a communication port (1) of a liquid cooling plate (12) of the two liquid cooling plates (1) in a sealed manner. A connector (3) is disposed at a joint between the metal tube (2) and the liquid cooling plate (1). The metal tube (2) is connected to the connector (3). The connector (3) is connected to the liquid cooling plate (1). The distance between the connector (3) and the liquid cooling plate (1) is adjustable. The depth to which the metal tube (2) is inserted into the communication port (12) varies with the distance between the connector (3) and the liquid cooling plate (1).

## Description

This application claims priority to Chinese Patent Application No. 202423289430.8 filed with the China National Intellectual Property Administration on Dec. 30, 2024, the disclosure of which is incorporated herein by reference in its entirety.

### TECHNICAL FIELD

This application relates to the technical field of energy storage devices, for example, to a liquid cooling device and a battery pack.

### BACKGROUND

A battery pack requires a liquid cooling device to regulate its temperature and ensure a stable operating temperature.

### TECHNICAL PROBLEM

The liquid cooling device includes pipelines. Conventional nylon pipelines lack sufficient hardness to meet the high burst pressure resistance requirements of direct cooling. While pipelines made of metal can meet the high burst pressure resistance requirements, tolerances during pipeline assembly are difficult to absorb.

### TECHNICAL SOLUTION

This application provides a liquid cooling device and a battery pack, which can meet high burst pressure resistance requirements and absorb assembly tolerances.

In a first aspect, this application provides a liquid cooling device.

The liquid cooling device includes multiple liquid cooling plates, multiple metal tubes, and multiple connectors.

Each metal tube is configured to connect two liquid cooling plates. An end of a metal tube of the plurality of metal tubes is inserted into a communication port of a liquid cooling plate of the two liquid cooling plates in a sealed manner.

A connector is disposed at a joint between the metal tube and the liquid cooling plate. The metal tube is connected to the connector. The connector is connected to the liquid cooling plate. The distance between the connector and the liquid cooling plate is adjustable. The depth to which the metal tube is inserted into the communication port varies with the distance between the connector and the liquid cooling plate.

In a second aspect, this application provides a battery pack. The battery pack includes a battery box and the preceding liquid cooling device. The liquid cooling device is disposed within the battery box.

### BENEFICIAL EFFECTS

This application provides a liquid cooling device. The liquid cooling device includes multiple liquid cooling plates, multiple metal tubes, and multiple connectors. Each metal tube is configured to connect two liquid cooling plates. An end of the metal tube is inserted into a communication port of a liquid cooling plate of the two liquid cooling plates in a sealed manner. A connector is disposed at a joint between the metal tube and the liquid cooling plate. The metal tube is connected to the connector. The connector is connected to the liquid cooling plate. The distance between the connector and the liquid cooling plate is adjustable. The depth to which the metal tube is inserted into the communication port varies with the distance between the connector and the liquid cooling plate. The metal tube has high structural strength and thus can meet the high burst pressure resistance requirements of direct cooling. The distance between the connector and the liquid cooling plate is adjusted to adjust the insertion depth of the metal tube into the communication port, thereby absorbing the assembly tolerance of the metal tube along the direction of the insertion depth of the communication port.

This application also provides a battery pack. The battery pack includes a battery box and the preceding liquid cooling device. The liquid cooling device is disposed within the battery box. The battery pack can meet high burst pressure resistance requirements and absorb assembly tolerances.

### BRIEF DESCRIPTION OF THE DRAWINGS

FIG. 1 is a view illustrating the structure of a liquid cooling device from a first perspective according to an embodiment of this application.
FIG. 2 is an enlarged view of portion A in FIG. 1.
FIG. 3 is a view illustrating the structure of a liquid cooling device from a second perspective according to an embodiment of this application.
FIG. 4 is an enlarged view of point B in FIG. 3.
FIG. 5 is a partial sectional view of a liquid cooling device including a first connector according to an embodiment of this application.
FIG. 6 is a partial sectional view of a liquid cooling device including a second connector according to an embodiment of this application.
FIG. 7 is a view illustrating the structure of a liquid cooling device from a third perspective according to an embodiment of this application.
FIG. 8 is a view illustrating the structure of a battery pack according to an embodiment of this application.

### Reference list

- 1: liquid cooling plate
- 11: internal flow channel
- 12: communication port
- 2: metal tube
- 21: protrusion
- 22: limiting groove
- 3: connector
- 31: first connector
- 311: first through-hole
- 312: step surface
- 313: notch
- 314: second through-hole
- 32: second connector
- 4: adjustment rod
- 5: sealing ring
- 6: wall-passing joint
- 7: battery box
- 8: third through-hole
- 9: liquid cooling device

### DETAILED DESCRIPTION

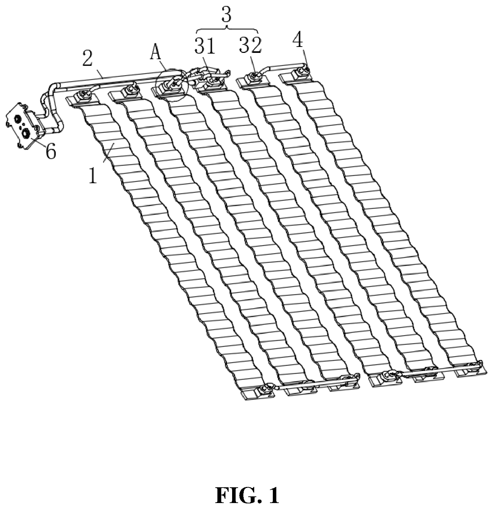

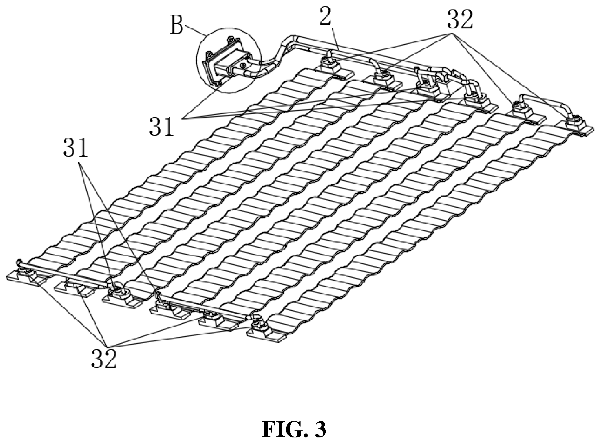

This embodiment provides a liquid cooling device to meet high burst pressure resistance requirements and absorb assembly tolerances. As shown in FIG. 1 to FIG. 7, the liquid cooling device of this embodiment includes multiple liquid cooling plates 1, multiple metal tubes 2, and multiple connectors 3. Each metal tube 2 is configured to connect two liquid cooling plates 1. An end of the metal tube 2 is inserted into a communication port 12 of a liquid cooling plate 1 of the two liquid cooling plates 1 in a sealed manner. A connector 3 is disposed at a joint between the metal tube 2 and the liquid cooling plate 1. The metal tube 2 is connected to the connector 3. The connector 3 is connected to the liquid cooling plate 1. The distance between the connector 3 and the liquid cooling plate 1 is adjustable. The depth to which the metal tube 2 is inserted into the communication port 12 varies with the distance between the connector 3 and the liquid cooling plate 1.

The metal tube 2 has high structural strength and thus can meet the high burst pressure resistance requirements of direct cooling. The distance between the connector 3 and the liquid cooling plate 1 is adjusted to adjust the insertion depth of the metal tube 2 into the communication port 12, thereby absorbing the assembly tolerance of the metal tube 2 along the direction of the insertion depth of the communication port 12. The liquid cooling device configured for direct cooling in this embodiment has a burst pressure resistance of 10 MPa.

Optionally, the cross-section of the liquid cooling plate 1 along a first plane is wavy, and the first plane is parallel to the length direction of the liquid cooling plate 1 and perpendicular to the width direction of the liquid cooling plate 1. A cylindrical battery cell may be placed in a wavy groove of the wavy shape, and the wavy groove can fit against the sidewall of the cylindrical battery cell and increase contact area, thereby improving heat exchange efficiency. Optionally, cylindrical battery cells may be placed on two sides of the liquid cooling plate 1, or only one side of the liquid cooling plate 1 is provided with a cylindrical battery cell.

As shown in FIG. 1, FIG. 3, and FIG. 7, optionally, multiple liquid cooling plates 1 are provided and sequentially arranged along the width direction of the liquid cooling plate 1, meaning that length directions of the multiple liquid cooling plates 1 are relatively parallel. Optionally, in this embodiment, the multiple liquid cooling plates 1 are first connected in series and then in parallel through the metal tubes 2. In other embodiments, the liquid cooling plates 1 may be configured in series only, configured in parallel only, or first connected in parallel and then in series.

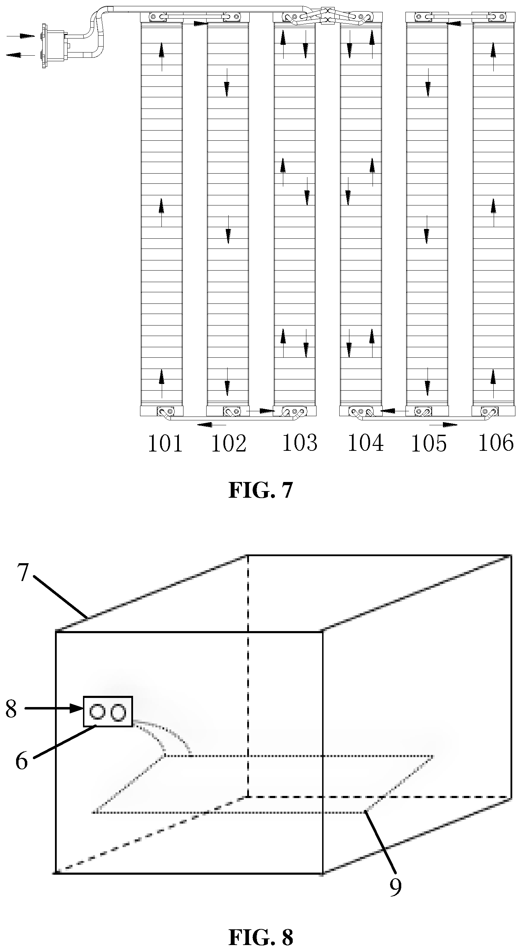

As shown in FIG. 7, in this embodiment, six liquid cooling plates 1 are provided. A main input metal tube 2 is divided into two streams by a flow splitter. The two streams connect to first ends of two central liquid cooling plates 1 via two metal tubes 2. Second ends of the two central liquid cooling plates 1 connect to second ends of two outermost liquid cooling plates 1 via metal tubes 2. The left one of the two central liquid cooling plates 1 connects to the leftmost liquid cooling plate 1, and the right one of the two central liquid cooling plates 1 connects to the rightmost liquid cooling plate 1. First ends of the two outermost liquid cooling plates 1 then connect to the central liquid cooling plates 1 via adjacent liquid cooling plates 1. The two streams of coolant from the two central liquid cooling plates 1 converge via a flow splitter, reach a main output metal tube 2, and connect to the main input metal tube 2 via external pipelines. The preceding liquid cooling plates 1 are first connected in series and then in parallel. The flow from the central to the outermost liquid cooling plates can maximize heat exchange uniformity and ensure consistent temperatures across battery cells.

Optionally, as shown in FIG. 7, six liquid cooling plates 1 are provided, labeled from left to right as a first liquid cooling plate 101, a second liquid cooling plate 102, a third liquid cooling plate 103, a fourth liquid cooling plate 104, a fifth liquid cooling plate 105, and a sixth liquid cooling plate 106. The main input metal tube 2 is divided into two streams by a flow splitter. A first stream connects to a first end of the third liquid cooling plate 103 via a metal tube 2, a second end of the third liquid cooling plate 103 connects to a second end of the first liquid cooling plate 101 via a metal tube 2, a first end of the first liquid cooling plate 101 connects to a first end of the second liquid cooling plate 102 via a metal tube 2, and a second end of the second liquid cooling plate 102 connects to the second end of the third liquid cooling plate 103 via a metal tube 2. A second stream connects to a first end of the fourth liquid cooling plate 104 via a metal tube 2, a second end of the fourth liquid cooling plate 104 connects to a second end of the sixth liquid cooling plate 106 via a metal tube 2, a first end of the sixth liquid cooling plate 106 connects to a first end of the fifth liquid cooling plate 105 via a metal tube 2, and a second end of the fifth liquid cooling plate 105 connects to the second end of the fourth liquid cooling plate 104 via a metal tube 2. The two streams of coolant from the third liquid cooling plate 103 and the fourth liquid cooling plate 104, following the arrow directions in FIG. 7, converge via a flow splitter to reach the main output metal tube 2 and connect to the main input metal tube 2 via external pipelines. The preceding liquid cooling plates 1 are first connected in series and then in parallel. The flow from the central to the outermost liquid cooling plates can maximize heat exchange uniformity and ensure consistent temperatures across battery cells.

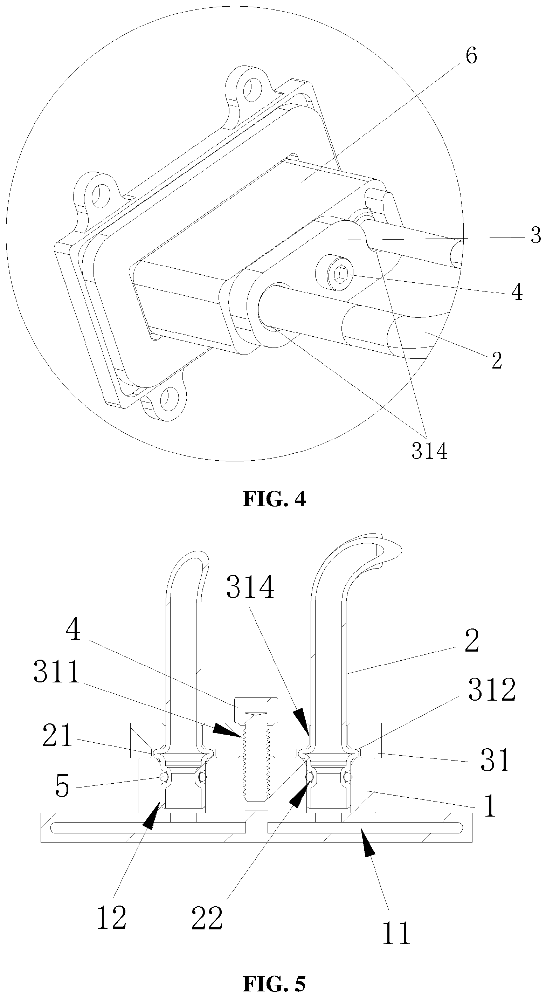

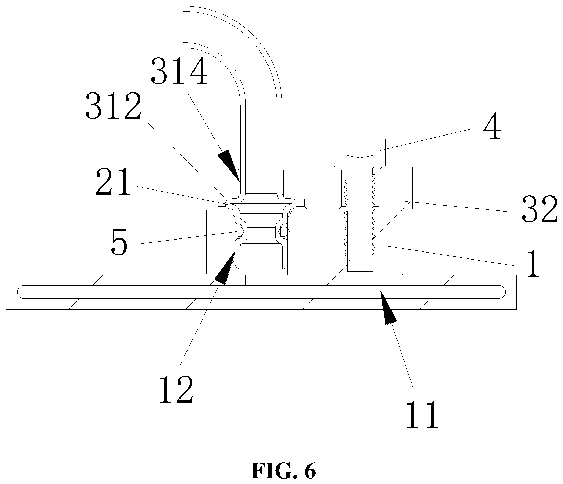

As shown in FIG. 5 and FIG. 6, to adjust the distance between the connector 3 and the liquid cooling plate 1, optionally, the liquid cooling device also includes an adjustment rod 4. A first through-hole 311 is formed through the connector 3, and a threaded hole is formed on the liquid cooling plate 1. The adjustment rod 4 has an external thread, and the adjustment rod 4 passes through the first through-hole 311 and is threaded into the threaded hole. The nut of the adjustment rod 4 is rotated so that the depth to which the adjustment rod 4 is inserted into the threaded hole can be adjusted, thereby adjusting the distance between the nut of the adjustment rod 4 and the liquid cooling plate 1. Since the connector 3 is located between the nut of the adjustment rod 4 and the liquid cooling plate 1, the movable distance of the connector 3 can be adjusted, thereby absorbing the assembly tolerance of the metal tube 2 based on actual assembly conditions.

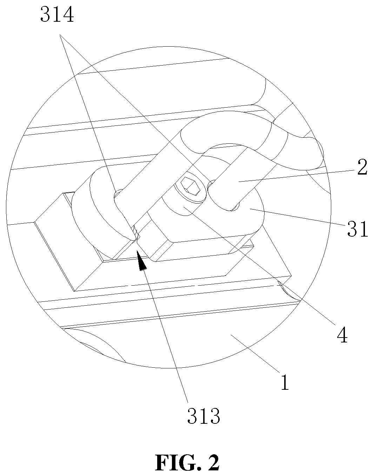

Optionally, the connector 3 includes a first connector 31. Two second through-holes 314 are formed on the first connector 314. Two metal tubes 2 pass through the two second through-holes 314, respectively and are inserted into two communication ports 12 of the liquid cooling plate 1. As shown in FIG. 2 and FIG. 4, at least one second through-hole 314 of the two second through-holes 314 of the first connector 31 has a notch 313, and the notch 313 is formed to extend radially through the one second through-hole 314. The notch 313 can absorb the assembly tolerance of the metal tube 2 and allow the metal tube 2 to move or tilt to a certain degree in a radial direction. Optionally, the notch 313 is formed to extend in a direction perpendicular to a line connecting the two second through-holes 314.

Optionally, among two metal tubes 2 connected to one first connector 31, a first metal tube 2 is welded to the first connector 31, while a second metal tube 2 is not welded to the first connector 31. Thus, the positions of the two metal tubes 2 relative to the first connector 31 can be adjusted to absorb assembly tolerances of the two metal tubes 2.

As shown in FIG. 6, optionally, the connector 3 also includes a second connector 32. The second connector 32 has only one second through-hole 314 and is connected to only one metal tube 2. The metal tube 2 is welded to the second connector 32. The adjustment rod 4 is rotated so that the distance between the second connector 32 and the liquid cooling plate 1 can be adjusted, thereby absorbing the assembly tolerance between the metal tube 2 and the liquid cooling plate 1.

For a liquid cooling plate 1 with two internal flow channels 11 spaced apart, a first connector 31 is disposed at an end of the liquid cooling plate 1 to connect two metal tubes 2 to the two internal flow channels 11. For a liquid cooling plate 1 with only one internal flow channel 11, a second connector 32 is disposed at an end of the liquid cooling plate 1. In this embodiment, the two central liquid cooling plates 1 are provided with first connectors 31, while the other four liquid cooling plates 1 are provided with second connectors 32. In other embodiments, all liquid cooling plates 1 may have a single internal flow channel 11 or have two internal flow channels 11, or some liquid cooling plates 1 may have one internal flow channel 11 and others may have two internal flow channels 11.

As shown in FIG. 5, to limit the movement range of a metal tube 2 that is not welded to the first connector 31, optionally, the outer wall of the metal tube 2 is provided with a protrusion 21. The second through-hole 314 has a step surface 312, and the step surface 312 abuts against an end face of the protrusion 21 facing away from the communication port 12 such that the connector 3 restricts movement of the metal tube 2 in a direction away from the communication port 12. That is, the protrusion 21 can only move within the space between the liquid cooling plate 1 and the step surface 312 of the first connector 31.

As shown in FIG. 6, optionally, the second through-hole 314 of the second connector 32 also has a step surface 312. The step surface 312 abuts against the protrusion 21 of the metal tube 2, thereby reducing stress at the weld between the second connector 32 and the metal tube 2 through mechanical abutment.

To ensure a sealed connection between the metal tube 2 and the communication port 12, optionally, the liquid cooling device also includes a sealing ring 5. The sealing ring 5 is sleeved on the metal tube 2 and interposed between the metal tube 2 and the inner wall of the communication port 12. The sealing ring 5 is in interference fit with the communication port 12 to circumferentially seal the gap between the metal tube 2 and the inner wall of the communication port 12.

To prevent displacement of the sealing ring 5 on the metal tube 2, optionally, a limiting groove 22 is circumferentially formed on the metal tube 2, and the sealing ring 5 is located within the limiting groove 22. The limiting groove 22 is located on a portion of the metal tube 2 inserted into the communication port 12.

Optionally, thinner-walled metal tubes 2 may be used among multiple liquid cooling plates 1. The thinner-walled metal tubes 2 are capable of withstanding a certain degree of deformation to improve the absorption of assembly tolerances.

Optionally, the liquid cooling device also includes a wall-passing joint 6. The wall-passing joint 6 is connected to a battery box 7 and disposed at a third through-hole 8 of the battery box 7. Two communication ports 12 are also formed on the wall-passing joint 6. First ends of two metal tubes 2 are connected to the two communication ports 12 of the wall-passing joint 6, respectively, and second ends of the two metal tubes 2 are connected to the liquid cooling plate 1. A first end of the communication port 12 of the wall-passing joint 6 opens toward the interior of the battery box 7. That is, the two communication ports 12 connect to the main input and main output metal tubes 2, respectively. A second end of the communication port 12 of the wall-passing joint 6 opens toward the exterior of the battery box 7 to connect with external pipelines, thereby forming a circulation loop.

Similar to the arrangement at the liquid cooling plate 1, optionally, the wall-passing joint 6 is also provided with a connector 3 and an adjustment rod 4. The adjustment rod 4 is adjusted to adjust the distance between the connector 3 and the wall-passing joint 6, thereby adjusting the depth to which the metal tube 2 is inserted into the communication port 12 of the wall-passing joint 6 and absorbing the assembly tolerance of the metal tube 2 along the direction of the insertion depth of the communication port 12. Optionally, in this embodiment, a first connector 31 is disposed at the wall-passing joint 6.

Optionally, in this embodiment, the metal tube 2 is inserted into the communication port 12 of the liquid cooling plate 1 along the thickness direction of the liquid cooling plate 1 and inserted into the communication port 12 of the wall-passing joint 6 along the width direction of the liquid cooling plate 1. One of two first through-holes 311 of the connector 3 at the liquid cooling plate 1 connecting to a flow splitter has a notch 313, and the notch 313 is formed to extend along the length direction of the liquid cooling plate 1. This design can absorb the assembly tolerance of the metal tube 2 along the thickness direction, width direction, and length direction of the liquid cooling plate 1 and ensure a sealed assembly of the metal tube 2.

As shown in FIG. 8, this embodiment also provides a battery pack. The battery pack includes a battery box 7 and the preceding liquid cooling device 9. The liquid cooling device 9 is disposed within the battery box 7. Optionally, the battery pack includes a cylindrical battery cell. The sidewall of the cylindrical battery cell fits against a wavy groove of the liquid cooling plate 1. In other embodiments, the liquid cooling plate 1 may be configured as a flat plate to accommodate square-shaped battery cells.

The battery pack can meet high burst pressure resistance requirements and absorb assembly tolerances.

## Claims

1. A liquid cooling device, comprising:
a plurality of liquid cooling plates (1);
a plurality of metal tubes (2), wherein each metal tube (2) of the plurality of metal tubes (2) is configured to connect two liquid cooling plates of the plurality of liquid cooling plates (1), and an end of a metal tube (2) of the plurality of metal tubes (2) is inserted into a communication port (12) of a liquid cooling plate (1) of the two liquid cooling plates in a sealed manner; and
a plurality of connectors (3), wherein a connector (3) of the plurality of connectors (3) is disposed at a joint between the metal tube (2) and the liquid cooling plate (1), the metal tube (2) is connected to the connector (3), the connector (3) is connected to the liquid cooling plate (1), a distance between the connector (3) and the liquid cooling plate (1) is adjustable, and a depth to which the metal tube (2) is inserted into the communication port (12) varies with the distance between the connector (3) and the liquid cooling plate (1).

2. The liquid cooling device according to claim 1, further comprising an adjustment rod (4), wherein a first through-hole (311) is formed through the connector (3), a threaded hole is formed on the liquid cooling plate (1), the adjustment rod (4) has an external thread, and the adjustment rod (4) passes through the first through-hole (311) and is threaded into the threaded hole.

3. The liquid cooling device according to claim 1, wherein a second through-hole (314) is formed on the connector (3), the metal tube (2) passes through the second through-hole (314) and is inserted into the communication port (12), an outer wall of the metal tube (2) is provided with a protrusion (21), the second through-hole (314) has a step surface (312) disposed inside the second through-hole (314), and the step surface (312) abuts against an end face of the protrusion (21) facing away from the communication port (12) such that the connector (3) can restrict movement of the metal tube (2) in a direction away from the communication port (12).

4. The liquid cooling device according to claim 1, further comprising a sealing ring (5), wherein the sealing ring (5) is sleeved on the metal tube (2) and interposed between the metal tube (2) and an inner wall of the communication port (12), and the sealing ring (5) is in interference fit with the communication port (12).

5. The liquid cooling device according to claim 4, wherein a limiting groove (22) is circumferentially formed on the metal tube (2), and the sealing ring (5) is located within the limiting groove (22).

6. The liquid cooling device according to any one of claims 1 to 5, wherein the connector (3) comprises a first connector (31), two second through-holes (314) are formed on the first connector (31), two metal tubes (2) of the plurality of metal tubes (2) pass through the two second through-holes (314), respectively and are inserted into two communication ports (12) of the liquid cooling plate (1), at least one second through-hole (314) of the two second through-holes (314) of the first connector (31) has a notch (313), and the notch (313) is formed to extend radially through the one second through-hole (314).

7. The liquid cooling device according to any one of claims 1 to 5, wherein a cross-section of the liquid cooling plate (1) along a first plane is wavy, and the first plane is parallel to a length direction of the liquid cooling plate (1) and perpendicular to a width direction of the liquid cooling plate (1).

8. The liquid cooling device according to any one of claims 1 to 5, wherein the plurality of liquid cooling plates (1) are sequentially arranged along a width direction of the liquid cooling plate (1), and the plurality of liquid cooling plates (1) are first connected in series and then in parallel through the plurality of metal tubes (2).

9. The liquid cooling device according to any one of claims 1 to 5, further comprising a wall-passing joint (6) configured to be connected to a third through-hole (8) of a battery box (7).

10. A battery pack, comprising: a battery box (7) and the liquid cooling device (9) according to any one of claims 1 to 9, wherein the liquid cooling device (9) is disposed within the battery box (7).
